# EUROPÄISCHE PATENTSCHRIFT

(11) **EP 2 557 069 B1**
(45) Veröffentlichungstag und Bekanntmachung des Hinweises auf die Patenterteilung: **30.03.2016**
(21) Anmeldenummer: 12176157.1
(22) Anmeldetag: 29.09.2011
(51) Int. Cl.: C02F 1/68, B01F 1/00, B01F 3/08, B01F 5/04

(54) **Vorrichtung für eine Trinkwasseraufbereitungsanlage mit einem Filterkopf**
Device for a drinking water processing assembly comprising a filter head
Dispositif pour une installation de préparation d'eau potable contenant une tête de filtre

(30) Priorität: 01.10.2010 DE 202010013845 U
(43) Veröffentlichungstag der Anmeldung: 13.02.2013
(62) Teilanmeldung aus: 11183330.7
(73) Patentinhaber: Waterhouse ATT Atlas Technique & Trade GmbH, 27777 Ganderkesee (DE)
(72) Erfinder: Schmidt, Dieter, 27777 Ganderkesee (DE); Schmidt, Oliver, 27777 Ganderkesee (DE)
(74) Vertreter: Jabbusch, Matthias

(56) Entgegenhaltungen:
- US-A1- 2005 147 546

## Beschreibung

Die Erfindung betrifft eine Vorrichtung für eine Trinkwasseraufbereitungsanlage mit einem Filterkopf, der wenigstens eine Trinkwasserzulaufleitung, wenigstens eine Trinkwasserauslaufleitung, wenigstens eine zwischen der Trinkwasserzulaufleitung und der Trinkwasserauslaufleitung angeordnete Filterpatronenaufnahme sowie wenigstens eine an der Trinkwasserauslaufleitung ausgebildete Desinfektionsmittelzuführöffnung aufweist, wobei die Desinfektionsmittelzuführöffnung als Auslauföffnung einer in die Trinkwasserauslaufleitung führenden Zulaufleitung ausgebildet ist und die Trinkwasserauslaufleitung und die Zulaufleitung über wenigstens eine Venturidüse miteinander verbunden sind.

Bekannte Vorrichtungen dienen dem Anschluss von Filterpatronen sowie deren regelmäßigem Austausch. Um zu verhindern, dass Keime und Bakterien von den Trinkwasserauslässen die Leitungen der Trinkwasseraufbereitungsanlage bis in die Filterpatronen hinauf wandern, ist es bekannt die zwischen dem Filterkopf und dem Trinkwasserauslass gelegenen Leitungsteile in regelmäßigen Abständen zu desinfizieren. Zur Desinfektion sind insbesondere mobil und in regelmäßigen Zeitabständen einsetzbare Vorrichtungen bekannt, mit denen die Trinkwasserleitung über flexible Verbindungsleitungen mit Desinfektionsflüssigkeit beschickt bzw. gespült werden. Da der Einsatz dieser bekannten Vorrichtungen relativ zeitaufwendig ist, wird in der deutschen Gebrauchsmusterschrift 20 2004 013 168.4 vorgeschlagen, eine Flüssigkeitsaufbereitungsleitung mittels einer Wechselpatrone zu desinfizieren, die einen Durchlaufbehälter mit einer Desinfektionsmittelaufnahme aufweist. Diese Wechselpatrone kann gegen bekannte Filterpatronen ausgetauscht bzw. ausgewechselt werden. Das in der Desinfektionsmittelaufnahme enthaltene Desinfektionsmittel gelangt somit in einem Beschickungsvorgang über eine vorbestimmte, den Durchlaufbehälter durchströmende Menge ungefilterten Wassers in die zu desinfizierenden Trinkwasserleitungen. Insbesondere bei Filterpatronen, die einen sogenannten Mikrofilter aufweisen, besteht das deutliche Risiko, den Beschickungsvorgang unbeabsichtigt ohne Desinfektionsmittel, mit einer zu geringen Menge Desinfektionsmittel oder mit einer zu großen Menge ungefilterten Wassers durchzuführen, so dass im ungefilterten Wasser mitgeführte Keime und Bakterien in reproduktionsfähigem Zustand in die zu desinfizierenden Leitungsteile gelangen können. Nach erfolgtem Beschickungsvorgang ist die die Desinfektionsmittelaufnahme aufweisende Wechselpatrone wieder gegen eine Filterpatrone auszutauschen, wobei für die Zeit des Patronenwechsels die Anschlussöffnung der Filterpatronenaufnahme ungeschützt der Atmosphäre ausgesetzt ist. Dabei kann es auch bei zuvor wirksam durchgeführter Desinfektion zu einer Neukontamination mit Keimen und Bakterien kommen, die dann durch nachfolgende Spül- und/oder Zapfvorgänge in die unmittelbar zuvor desinfizierten Leitungsteile hineingelangen können.

Aus der internationalen Anmeldeschrift WO 2010/011483 A2 ist eine Trinkwasseraufbereitungsanlage bekannt, bei der die Desinfektionsmittelzuführöffnung als Beschickungsöffnung eines in der Trinkwasserauslaufleitung angeordneten Spülkäfigs ausgebildet ist. Dieser dient vorzugsweise der Aufnahme fester Desinfektionsmittel, die sich in dem durch den Spülkäfig hindurch fließenden Trinkwasser auflösen. Das feste Desinfektionsmittel ist insbesondere in Form von Tabletten ausgebildet. Die Beschickungsöffnung dient dabei ausschließlich dazu, dem Spülkäfig das Desinfektionsmittel zuführen zu können, und nicht der Hindurchleitung einer Desinfektionsmittellösung, die ein der Filterpatronenaufnahme über die Trinkwasserzulaufleitung zugeführtes Trinkwasser enthält. Eine derart angeordnete Desinfektionsmittelzuführöffnung hat den Vorteil, dass eine Desinfektion der Trinkwasseraufbereitungsanlage bei in der Filterpatronenaufnahme eingesetzter Filterpatrone durchgeführt werden kann, so dass die Filterpatrone die Trinkwasserauslaufleitung dauerhaft gegen Keime und Bakterien aus der Trinkwasserzulaufleitung schützt. Die Desinfektionsmittelzuführöffnung erlaubt die direkte Zufuhr eines fluiden, festen oder gasförmigen Desinfektionsmittels in die Trinkwasserauslaufleitung. Nach Beendigung einer über die Desinfektionsmittelzuführöffnung erfolgenden Desinfektionsmittelzufuhr kann die Desinfektionsmittelzuführöffnung verschlossen werden. Ein erneutes Öffnen der Desinfektionsmittelzuführöffnung ist vorteilhaft auch nach Beendigung der Desinfektionsmittelzufuhr nicht erforderlich, so dass das Risiko einer Neukontamination mit Bakterien und Keimen maßgeblich verringert ist.

Mit der Ausbildung eines Spülkäfigs besteht jedoch bei der Einbringung eines Desinfektionsmittels eine erhöhte Gefahr, dass es zu Verzögerungen beim Auflösen fester Bestandteile des Desinfektionsmittels kommt oder dass bei Beschickungsvorgängen kontaminierte Fremdkörper in den Spülkäfig hinein gelangen, deren Dekontamination nicht im Rahmen einer vorrichtungsspezifischen Desinfektion möglich ist.

US 2005/147546 A1 offenbart eine Vorrichtung zur Aufbereitung von Wasser mit zwei Filterpatronen. Der "housing" genannte Aufbau ist eine fest zusammengebaute Struktur mit einer ausgedehnten Bodenplatte, an der sich sowohl die Filterpatronenaufnahmen als auch die Zu- und Ableitungen finden. Des weiteren ist auf der Platte ein Venturi-Injektor für die Zuführung von Ozon angebracht.

Der Erfindung liegt daher die Aufgabe zugrunde, eine Vorrichtung der eingangs genannten Gattung aufzuzeigen, mit der die Desinfektion von Trinkwasseraufbereitungsanlagen besonders einfach durchführbar ist, ohne dabei das Risiko einer Neukontamination der Trinkwasserleitungen mit Bakterien und Keimen zu vergrößern.

Diese Aufgabe ist erfindungsgemäß durch eine Vorrichtung mit den Merkmalen des Patentanspruches 1 gelöst. Eine vorteilhafte Weiterbildung der Erfindung ist im Anspruch 2 beschrieben.

In der erfindungsgemäßen Vorrichtung ist die Desinfektionsmittelzuführöffnung als Auslauföffnung einer in die Trinkwasserauslaufleitung führenden Zulaufleitung ausgebildet. Die Zulaufleitung ist vorzugsweise als eine in einem Gehäuse des Filterkopfes gelegene Kernbohrung ausgebildet. Zum Anschluss an eine Desinfektionsmittelquelle weist die Zulaufleitung mit der Desinfektionsmittelquelle zusammenwirkende Anschlussstrukturen auf, die als Steck-, Schraub- oder Rastverbindungen ausgebildet sein können.

Um die Zulaufleitung unmittelbar nach jeder Desinfektionsmittelzufuhr zuverlässig verschließen zu können, ist in der Zulaufleitung wenigstens ein Rückschlagventil angeordnet. Das beweglich in dem Rückschlagventil gehaltene Verschlussteil weist mit der Zulaufleitung zusammenwirkende Kupplungsstrukturen auf, die insbesondere der Ausbildung eines Ventilsitzes dienen. Es liegt jedoch im Rahmen der Erfindung, die Zulaufleitung mit anderen Verschlusstechniken auszurüsten, die ein einfaches und schnelles Öffnen und Schließen der Auslauföffnung ermöglichen.

Die Trinkwasserauslaufleitung und die Zulaufleitung sind über wenigstens eine Venturidüse miteinander verbunden. Für diese Verbindung ist die Zulaufleitung mit dem bei Venturidüsen als Abnahmerohr bezeichneten Leitungsstück verbunden. Das Abnahmerohr weist vorzugsweise mehrere Mündungsöffnungen auf, die im Bereich der düsenartigen Verengung der die Venturidüse durchlaufenden Trinkwasserauslaufleitung gleichmäßig verteilt angeordnet sind. Mit der Venturidüse fungiert die Zulaufleitung als eine Saugleitung. Es ist jedoch ebenso denkbar, die Desinfektionsmittelquelle mit einem Überdruck zu beaufschlagen, so dass die Zulaufleitung dann als Druckleitung fungieren würde.

Eine besonders robuste und gleichwohl einfach zu installierende Vorrichtung ist weiterhin dadurch geschaffen, dass der Filterkopf und die Venturidüse ebenfalls über wenigstens ein Gehäuse einstückig miteinander verbunden sind. Auf diese Weise bildet die erfindungsgemäße Vorrichtung ein einziges Aggregat aus, in welchem der Filterkopf und die Venturidüse unzertrennlich miteinander verbunden sind. Es liegt jedoch durchaus im Rahmen der Erfindung, den Filterkopf aus zwei Gehäuseteilen zusammenzusetzen, wobei dann mit einem der Gehäuseteile die Venturidüse ausgebildet ist.

Im Sinne der Erfindung setzt sich die Filtereinrichtung aus einem oder mehreren Filterköpfen sowie einer beliebigen Anzahl von Filterpatronen und/oder Desinfektionsmittelpatronen zusammen.

Ein Ausführungsbeispiel, aus dem sich weitere erfinderische Merkmale ergeben, ist in der Zeichnung dargestellt. Es zeigen:
- Fig. 1:: eine perspektivische Ansicht einer teilgeschnittenen, erfindungsgemäßen Vorrichtung in einem ersten Ausführungsbeispiel; und
- Fig. 2:: eine perspektivische Ansicht einer mittig geschnittenen Vorrichtung in einem zweiten Ausführungsbeispiel.

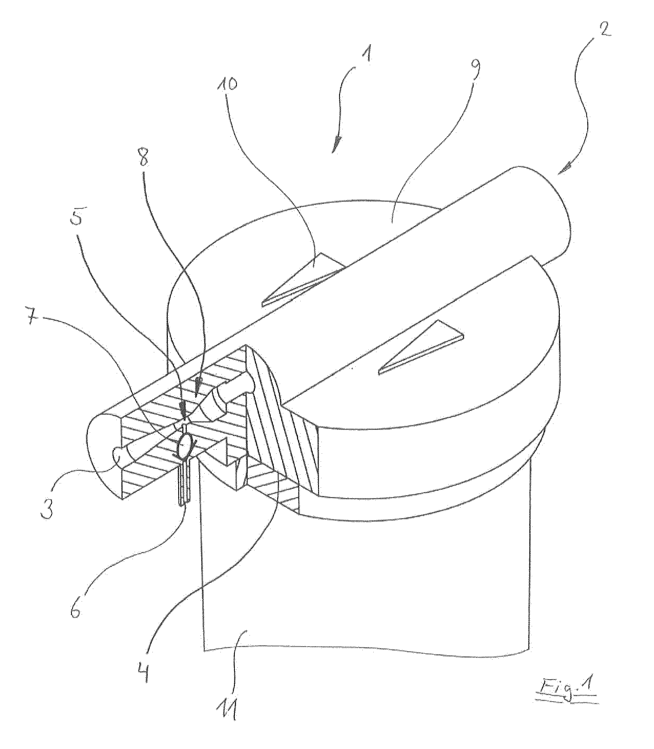

Die Fig. 1 zeigt die erfindungsgemäße Vorrichtung mit einem Filterkopf 1, der eine Trinkwasserzulaufleitung 2, eine Trinkwasserauslaufleitung 3 sowie wenigstens eine zwischen der Trinkwasserzulaufleitung 2 und der Trinkwasserauslaufleitung 3 angeordnete Filterpatronenaufnahme 4 aufweist. Der Filterkopf 1 weist eine an der Trinkwasserauslaufleitung 3 angeordnete Desinfektionsmittelzuführöffnung 5 auf, die als Auslaufleitung einer in die Trinkwasserauslaufleitung 3 führenden Zulaufleitung 6 ausgebildet ist. In der Zulaufleitung 6 ist ein Rückschlagventil 7 angeordnet. Die Trinkwasserauslaufleitung 3 und die Zulaufleitung 6 sind über eine Venturidüse 8 miteinander verbunden. Der Filterkopf 1 weist ein die Venturidüse 8 in sich aufnehmendes Gehäuse 9 auf, an dessen Oberseite zwei die Durchflussrichtung angebende Pfeile 10 angeformt sind. Das in dieser Figur dargestellte Ausführungsbeispiel zeigt die erfindungsgemäße Vorrichtung mit einer in der Filterpatronenaufnahme 4 aufgenommenen Filterpatrone 11.

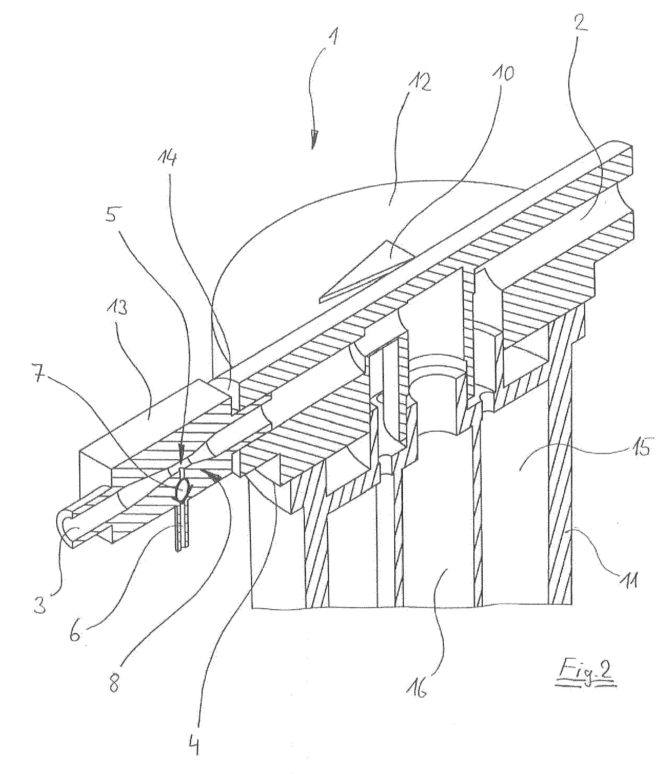

Die Fig. 2 zeigt eine perspektivische Ansicht einer mittig geschnittenen Vorrichtung in einem zweiten Ausführungsbeispiel. In diesem Ausführungsbeispiel ist der Filterkopf aus zwei Gehäuseteilen 12, 13 zusammengesetzt, wobei mit dem Gehäuseteil 13 die Venturidüse 8 ausgebildet ist. Die Gehäuseteile 12 und 13 sind über eine flüssigkeitsdichte Steckkupplung 14 miteinander verbunden. Durch den Mittenschnitt ist erkennbar, dass die Trinkwasserzulaufleitung 2 und die Trinkwasserauslaufleitung 3 über eine in der Filterpatrone 11 ausgebildete äußere Filterkammer 15 sowie eine innere Filterkammer 16 miteinander verbunden sind. Gleiche Bauteile sind mit gleichen Bezugszahlen versehen.

## Patentansprüche

1. Vorrichtung für eine Trinkwasseraufbereitungsanlage mit einem Filterkopf (1), der wenigstens eine Trinkwasserzulaufleitung (2), wenigstens eine Trinkwasserauslaufleitung (3), wenigstens eine zwischen der Trinkwasserzulaufleitung und der Trinkwasserauslaufleitung angeordnete Filterpatronenaufnahme sowie wenigstens eine an der Trinkwasserauslaufleitung ausgebildete Desinfektionsmittelzuführöffnung (5) aufweist, wobei die Desinfektionsmittelzuführöffnung (5) als Auslauföffnung einer in die Trinkwasserauslaufleitung (3) führenden Zulaufleitung (6) ausgebildet ist und die Trinkwasserauslaufleitung (3) und die Zulaufleitung (6) über wenigstens eine Venturidüse (8) miteinander verbunden sind,
**dadurch gekennzeichnet,**
**dass** der Filterkopf (1) und die Venturidüse (8) über wenigstens ein Gehäuse (9) einstückig miteinander verbunden sind

2. Vorrichtung nach Anspruch 1, **dadurch gekennzeichnet, dass** in der Zulaufleitung (6) wenigstens ein Rückschlagventil (7) angeordnet ist.

## Claims

1. A device for a drinking water processing assembly with a filter head (1), comprising at least one drinking water inflow line (2), at least one drinking water outflow line (3), at least one filter cartridge holder arranged between the drinking water inflow line and the drinking water outflow line as well as at least one disinfectant feed opening (5) formed on the drinking water outflow line, wherein the disinfectant feed opening (5) is configured as an outflow opening of an inflow line (6) leading into the drinking water outflow line (3) and the drinking water outflow line (3) and the inflow line (6) are connected with each other via at least one Venturi nozzle (8),
**characterised in that** the filter head (1) and the Venturi nozzle (8) are connected with each other in one piece via at least one housing (9).

2. The device according to claim 1, **characterised in that** the inflow line (6) has at least one non-return valve (7) arranged in it.

## Revendications

1. Dispositif pour une installation de préparation d'eau potable contenant une tête de filtre (1), qui comporte au moins une conduite d'arrivée d'au potable (2), au moins une conduite de sortie d'eau potable (3), au moins un logement de cartouche de filtre disposé entre la conduite d'arrivée d'eau potable et la conduite de sortie d'eau potable ainsi qu'au moins un orifice d'alimentation en désinfectant (5) constitué sur la conduite de sortie d'eau potable, pour lequel 1' orifice d'alimentation en désinfectant (5) est constitué comme ouverture d'écoulement d'une conduite d'arrivée (6) conduisant dans la conduite de sortie d'eau potable (3) et la conduite de sortie d'eau potable (3) et la conduite d'arrivée (6) sont raccordées entre elles par au moins un tube de Venturi (8),
**caractérisé en ce que**
la tête de filtre (1) et le tube de Venturi (8) sont reliés entre eux en une pièce par au moins un boîtier (9).

2. Dispositif selon la revendication 1 **caractérisé en ce qu'**au moins un clapet antiretour (7) est disposé dans la conduite d'arrivée (6).
